(19) Europäisches Patentamt
European Patent Office
Office européen des brevets

(11) EP 3 164 443 B1

(12) # EUROPÄISCHE PATENTSCHRIFT

(45) Veröffentlichungstag und Bekanntmachung des Hinweises auf die Patenterteilung:
**31.10.2018 Patentblatt 2018/44**

(21) Anmeldenummer: **15732681.0**

(22) Anmeldetag: **29.06.2015**

(51) Int Cl.:
***C08G 64/40*** $^{(2006.01)}$ ***C08G 64/34*** $^{(2006.01)}$

(86) Internationale Anmeldenummer:
**PCT/EP2015/064733**

(87) Internationale Veröffentlichungsnummer:
**WO 2016/001164 (07.01.2016 Gazette 2016/01)**

(54) **VERFAHREN ZUR REINIGUNG VON POLYCARBONATPOLYOLEN UND REINIGUNGSVORRICHTUNG HIERFÜR**

METHOD FOR THE PURIFICATION OF POLYCARBONATE POLYOLES AND CLEANING DEVICE FOR THE SAME

PROCÉDÉ DE NETTOYAGE DE POLYOLS DE POLYCARBONATE ET DISPOSITIF DE NETTOYAGE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2014 EP 14175603**

(43) Veröffentlichungstag der Anmeldung:
**10.05.2017 Patentblatt 2017/19**

(73) Patentinhaber: **Covestro Deutschland AG**
**51373 Leverkusen (DE)**

(72) Erfinder:
- **HOFMANN, Jörg**
  **47800 Krefeld (DE)**
- **BRAUN, Stefanie**
  **51069 Köln (DE)**
- **LAEMMERHOLD, Kai**
  **52078 Aachen (DE)**
- **WOHAK, Matthias**
  **41540 Dormagen (DE)**
- **AHMADZADE-YOUSSEFI, Cyrus**
  **50937 Köln (DE)**
- **BAUSA, Jürgen**
  **51515 Kürten (DE)**

(74) Vertreter: **Levpat**
**c/o Covestro AG**
**Gebäude 4825**
**51365 Leverkusen (DE)**

(56) Entgegenhaltungen:
**EP-A1- 2 703 426 WO-A1-2008/092767**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 164 443 B1

## Beschreibung

Die vorliegende Erfindung betrifft eine Reinigungsvorrichtung für Polycarbonatpolyole, insbesondere zur Abtrennung cyclischer Alkylencarbonate, sowie ein Verfahren zum Betrieb einer solchen Vorrichtung.

Polycarbonatpolyole erfreuen sich in den letzten Jahren einer zunehmenden Popularität. So können diese Verbindungen zumindest teilweise anstelle von Polyetherpolyolen verwendet werden, insbesondere bei der Herstellung von Polyurethanschaumstoffen, insbesondere Weichschaumstoffen. Dabei wird in Polycarbonatpolyolen Kohlendioxid als Comonomer verwendet. Dieses ist nicht nur preisgünstiger als die typischerweise für Polyetherpolyole eingesetzten Alkylenoxide, wie Ethylenoxid oder Propylenoxid, die zumeist petrochemischen Ursprungs sind, sondern durch den Einbau von Kohlendioxid in das Polymer wird gleichzeitig ein Treibhausgas verwendet, was aus Umweltgesichtspunkten interessant ist.

Verfahren zur Herstellung von Polycarbonatpolyolen sind grundsätzlich bekannt. Diese werden in der Regel ausgehend von einer Startersubstanz unter Verwendung geeigneter Katalysatoren aus Alkylenoxiden und Kohlendioxid erzeugt. Dabei wird im Wesentlichen zwischen zwei Herstellungsverfahren unterschieden. Bei der ersten Variante werden Alkylenoxid-Einheiten und das als Comonomer verwendete Kohlendioxid weitestgehend alternierend zu einer Polymerkette aufgebaut. Als Starter für diese Reaktion kann ein kurzkettiges Polyol, insbesondere ein Diol verwendet werden, wie beispielsweise Ethylenglykol. Ein solches Herstellungsverfahren ist beispielsweise aus WO 2010/028362 A1 bekannt.

Ein anderes Herstellungsverfahren ist beispielsweise aus WO 2008/092767 A1 bekannt. Bei diesem bekannten Herstellungsverfahren wird ebenfalls ausgehend von einem kurzkettigen Starter, wie Ethylenglykol oder Glycerin, unter Einsatz sogenannter Doppelmetallcyanid-Katalysatoren (DMC-Katalysatoren) ein Polymer aufgebaut, welches neben den aus Alkylenoxid und Kohlendioxid aufgebauten Carbonat-Gruppen zusätzlich Ether-Gruppierungen in der Polymerkette besitzt. Dies wird dadurch erreicht, dass DMC-Katalysatoren nicht nur die Reaktion von Alkylenoxid mit Kohlendioxid katalysieren können, sondern gleichermaßen die Etherbildung durch Reaktion zwei Alkylenoxide untereinander. Hierdurch kann das Eigenschaftsprofil der erhaltenen Polymere erheblich flexibler angepasst werden.

Bei den vorgenannten Herstellungsverfahren kommt es jedoch typischerweise neben dem eigentlichen Polymerkettenaufbau zu unerwünschten Nebenreaktionen, die zu niedermolekularen Produkten führen. So kann es durch Reaktion von einem Molekül-Alkylenoxid mit einem Molekül-Kohlendioxid zur Bildung cyclischer Alkylencarbonate kommen, bei der Verwendung von Propylenoxid beispielsweise zu Propylencarbonat. Die Entstehung ist in der folgenden Formel (I) gezeigt (beispielsweise für R = $CH_3$ Propylencarbonat):

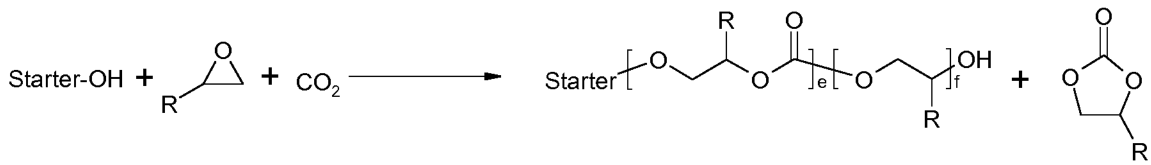

(I)

Da das Vorhandensein dieser Verbindungen im Endprodukt in der Regel unerwünscht ist, wird bei der Polymerisation die Reaktion unter Bedingungen durchgeführt, bei denen möglichst wenig cyclisches Alkylencarbonat entsteht. Dies kann in an sich bekannter Weise durch Einhaltung bestimmter Reaktionstemperaturen erreicht werden. Dies ist beispielsweise in WO 2008/092767 beschrieben, wo als bevorzugte Reaktionstemperatur 80 - 130°C angegeben wird. Dennoch kann selbst durch diese Maßnahmen eine Bildung cyclischer Alkylencarbonate nicht vollständig unterdrückt werden. So besitzen mittels DMC-Katalyse hergestellte Polyethercarbonatpolyole beispielsweise einen Anteil von 3 bis 15 Gew.-% an cyclischem Alkylencarbonat. Der Anteil an im Polycarbonatpolyol enthaltenen cyclischen Alkylencarbonaten wird bislang nach der Herstellung durch Abtrennverfahren auf einen Gehalt von unterhalb von 1 % reduziert.

In WO 2008/092767 wird die Abtrennung des cyclischen Propylencarbonats (cPC) mittels Vakuum-Strippen bei 150°C (3 Stunden) beschrieben, wobei cPC-Restgehalte < 200 ppm im Endprodukt erhalten werden. Beschrieben ist daneben die Abtrennung von cPC mittels Dünnschichtverdampfer oder Fallfilmverdampfer im Hochvakuum (Druck < 1 mbar) bei 120°C (siehe BMS 11 1 160-EP; Anmeldung Nr. 12181907.7). Restgehalte an cPC sind hier nicht angegeben.

Die Aufgabe der vorliegenden Erfindung bestand somit darin, ein verbessertes Verfahren zur Reinigung von Polycarbonatpolyolen zu Verfügung zu stellen, das mit einem reduzierten apparativen Aufbau betrieben werden kann und dabei gleichzeitig eine hohe Reinigungsleistung ermöglicht, insbesondere hinsichtlich der Entfernung cyclischer Alkylencarbonate. Ferner soll eine entsprechende Reinigungsvorrichtung zur Verfügung gestellt werden, mit der dieses Verfahren durchgeführt werden kann.

Die Aufgabe wird gelöst durch eine Reinigungsvorrichtung für Polycarbonatpolyole, insbesondere zur Abtrennung cyclischer Alkylencarbonate, umfassend eine mit einer Heizung versehene Verdampfungseinrichtung mit einem an dessen Oberseite angeordneten Einlass und einem Sumpf und eine mit der Verdampfungseinrichtung stromabwärts verbundene Strippkolonne mit einem Kopf und einem Sumpf, wobei in den Einlass der Verdampfungseinrichtung eine Zuleitung für das zu reinigende Polycarbonatpolyol mündet und von der Verdampfungseinrichtung eine Gasauslassleitung sowie eine in den Kopf der Strippkolonne mündende und mit einer Pumpe ausgestattete Verbindungsleitung abgehen, und wobei in den Sumpf der Strippkolonne eine Gaseinlassleitung für ein Inertgas mündet und vom Sumpf der Strippkolonne eine Produktleitung für das gereinigte Polycarbonatpolyol und vom Kopf der Strippkolonne eine Gasauslassleitung abgehen.

Im Rahmen der vorliegenden Erfindung wird der Begriff "Polycarbonatpolyole" als Oberbegriff verstanden, unter dem auch Polycarbonatpolyole subsummiert sind, die nicht rein alternierend aufgebaut sind, sondern auch Ether-Einheiten aufweisen. Solche Polycarbonatpolyole werden auch als "Polyethercarbonatpolyole" bezeichnet. Für das Erfindungsgemäße Reinigungsverfahren ist die Herkunft des zu reinigenden Polycarbonatpolyols ohne Belang. Es kann sich dabei um ein streng alternierendes Polycarbonatpolyol handeln, um ein Polyethercarbonatpolyol oder um Polycarbonatpolyole, die beispielsweise auf einem niedermolekularen Starter wie z.B. Glycerin oder einem höhermolekularen Starter, wie PEG 800 oder anderen höhermolekularen Startern basieren.

Der Erfindung liegt dabei die Erkenntnis zugrunde, dass mithilfe eines zweistufigen Verfahrens, bei dem die erste Stufe durch eine Verdampfungseinrichtung und die zweite Stufe durch eine Strippkolonne gebildet wird, bei vergleichsweise einfach realisierbaren Betriebsbedingungen, wie Druck und Temperatur, ein Großteil der vorhandenen Verunreinigungen entfernt werden kann, insbesondere die vorhandenen cyclischen Alkylencarbonate.

So kann die Verdampfungseinrichtung beispielsweise bei einem Druck von 100 mbar oder darunter betrieben werden, vorzugsweise bei 5 bis 100 mbar, bevorzugt bei 50 mbar oder darunter, weiter bevorzugt bei 25 mbar oder darunter, besonders bevorzugt bei 10 mbar oder darunter, wobei das zugeführte Rohprodukt auf eine Temperatur von beispielsweise 120 bis 180 °C, vorzugsweise etwa 160 °C erhitzt wird. Auf diese Weise wird bereits ein Teil der leicht flüchtigen Verbindungen, zu denen auch die cyclischen Alkylencarbonate zählen, durch Verdampfung entfernt, die anschließend in einem Kondensator kondensiert werden können. Dabei lässt sich der angegebene Betriebsdruck technisch relativ problemlos einstellen, wobei die Betriebstemperaturen auf der anderen Seite noch in einem tolerierbaren Bereich liegen, bei dem nicht mit einer Zersetzung der Polycarbonatpolyole in nennenswertem Maßstab gerechnet werden muss. Es ist also bei dem erfindungsgemäßen Verfahren nicht erforderlich, die Verdampfungseinrichtung im Hochvakuum zu betreiben. Zudem kann bei der erfindungsgemäßen Vorrichtung beziehungsweise dem erfindungsgemäßen Verfahren die Verweilzeit in der Verdampfungseinrichtung vergleichsweise gering gehalten werden, beispielsweise unterhalb von einer Minute. Auch im Sumpf der Verdampfungseinrichtung kann eine vergleichsweise kurze Verweildauer von beispielsweise 15 Minuten oder weniger, vorzugsweise 3 Minuten oder weniger eingestellt werden, so dass auch an dieser Stelle das Polycarbonatpolyol thermisch nicht allzu stark beansprucht wird.

Allerdings ist es im Rahmen des erfindungsgemäßen Verfahrens auch möglich, beispielsweise eine Verweilzeit von 10 Minuten bis 2 Stunden im Sumpf der Verdampfungseinrichtung einzustellen. In diesem Falle kann der Sumpf der Verdampfungseinrichtung als ein Zwischenpuffer für das vorgereinigte Produkt eingesetzt werden. Dabei kann es jedoch insbesondere bei längeren Verweilzeiten zu einer Nachbildung an Verunreinigungen kommen, wie beispielsweise von cyclischem Alkylencarbonat. Allerdings findet diese Nachbildung stromaufwärts von der Strippkolonne statt, in der die Endaufreinigung vollzogen wird und ist aus diesem Grunde weniger kritisch. Dennoch ist es in der Regel im Rahmen des erfindungsgemäßen Verfahrens bevorzugt, die vorgenannten kürzeren Verweilzeiten im Sumpf der Verdampfungseinrichtung einzuhalten.

In der zweiten Stufe wird das durch die Verdampfungseinrichtung vorgereinigte Produkt einer Strippkolonne zugeführt, in der eine weitere Aufreinigung erfolgt. Sollte es bei der Überführung des vorgereinigten Produkts zur Strippkolonne in der Zuleitung zu einer Abkühlung kommen, kann es vor dem Zuführen zur Strippkolonne wieder auf eine Temperatur von beispielsweise 120 bis 180 °C, insbesondere auf etwa 160 °C erhitzt werden. Das in den Sumpf der Strippkolonne zugeführte Inertgas, beispielsweise Stickstoff, wird typischerweise ebenfalls auf die vorgenannte Temperatur von 120 bis 180 °C, insbesondere auf etwa 160 °C erhitzt. Alternativ zu Stickstoff kann als Inertgas auch Kohlendioxid, Wasserdampf oder eine beliebige Mischung der vorgenannten Fluide verwendet werden.

Bei Verwendung von Stickstoff als Strippgas liegt der spezifische Stickstoff-Bedarf bevorzugt im Bereich von 0,2 - 0,8 kg Stickstoff, besonders bevorzugt im Bereich von 0,3 - 0,7 kg Stickstoff, jeweils bezogen auf die Masse (in kg) des der Strippkolonne zugeführten Produkts.

Aufgrund des Umstandes, dass das der Strippkolonne zugeführte Produkt in der Regel bereits von einem Großteil der vorhandenen leicht flüchtigen Verbindungen, wie cyclischen Alkylencarbonaten, befreit ist, ist der in der Strippkolonne verdampfende Anteil vergleichsweise niedrig, was entsprechend der hierfür aufzubringenden Verdampfungsenthalpie nur zu einer geringen Abkühlung der Strippkolonne führt. Deshalb ist in der Regel eine zusätzliche Wärmezufuhr zur Strippkolonne nicht zwingend erforderlich.

Die Strippkolonne kann im Vakuum betrieben werden, beispielsweise bei einem Druck von 50 bis 150 mbar, insbesondere bei etwa 80 mbar oder aber auch unter Normaldruck. Der mit leicht flüchtigen Verbindungen, unter anderem

cyclisches Alkylencarbonat, beladene Inertgasstrom kann nach dem Verlassen der Strippkolonne einem oder mehreren Kühlern zugeführt werden, in dem die leicht flüchtigen Verbindungen entfernt werden. Das Inertgas kann anschließend entweder über die Abluft entsorgt oder aber verdichtet und dem Prozess erneut zugeführt werden.

Bei dem erfindungsgemäßen Verfahren kann auch in der Strippkolonne die Verweilzeit vergleichsweise kurz gehalten werden, beispielsweise weniger als 3 Minuten, so dass auch in dieser zweiten Stufe eine Produktschädigung weitestgehend vermieden wird.

In vorteilhafter Ausgestaltung der erfindungsgemäßen Reinigungsvorrichtung mündet die Gasauslassleitung der Verdampfungseinrichtung und/ oder die Gasauslassleitung der Strippkolonne jeweils in eine Kühleinrichtung, in welcher in den gasförmigen Zustand überführte und über die Gasauslassleitung entfernte Verunreinigungen kondensiert werden können, insbesondere cyclische Alkylencarbonate. Hierdurch können die leicht flüchtigen Verbindungen entfernt werden, wobei beispielsweise das im Bereich der Strippkolonne verwendete Inertgas wieder dem Prozess zugeführt werden kann.

Bei der Reinigungsvorrichtung kann weiterhin vorgesehen sein, dass die Zuleitung, die Verbindungsleitung, die Gaseinlassleitung und/ oder die Produktleitung mit einer Heizung ausgerüstet sind. Dies ist besonders vorteilhaft, um den durch diese Leitungen geförderten Fluidstrom auf die gewünschte Temperatur zu bringen oder die vorgegebene Temperatur wieder einzustellen, wenn es aufgrund von Wärmeverlusten in den Leitungen zu einer Abkühlung unterhalb der gewünschten Betriebstemperatur gekommen ist. Außerdem wird durch das Erwärmen die Viskosität des durch die Leitungen geförderten Polymers niedrig gehalten. Dabei können die Heizungen unabhängig voneinander in der Weise geregelt werden, dass das in den entsprechenden Leitungen beförderte Fluid auf eine Temperatur von 120 bis 180 °C, insbesondere auf eine Temperatur von etwa 160 °C erwärmt wird. Zweckmäßigerweise ist die Heizung in den vorgenannten Leitungen in der Weise angeordnet, dass nach dem Durchlaufen des beheizten Bereichs keine wesentliche Abkühlung mehr erfolgen kann, bevor das auf die gewünschte Temperatur aufgeheizte Fluid der nächsten Prozessstufe zugeführt wird.

Nach einer weiteren Ausführungsform der erfindungsgemäßen Reinigungsvorrichtung ist in der Verbindungsleitung ein Dreiwegeventil angeordnet, von dem eine gewünschtenfalls mit einer Heizung und/ oder einer Pumpe versehene Rückführungsleitung abgeht, die in die Zuleitung oder in den Einlass der Verdampfungseinrichtung mündet. Mit anderen Worten wird hierdurch eine Umlaufleitung des Verdampfers geschaffen. Dies ist besonders vorteilhaft, da auf diese Weise eine teilweise Rückführung des vorgereinigten Produkts zum Einlass der Verdampfungseinrichtung vollzogen werden kann, wodurch der Konzentrationsgehalt an leicht flüchtigen Verbindungen, wie cyclischen Alkylencarbonaten, am Einlass der Verdampfungseinrichtung reduziert wird. Durch das mehrfache Durchlaufen der Verdampfungseinrichtung wird deren Trennleistung verbessert, ohne die Verdampfungseinrichtung an sich vergrößern zu müssen.

Analog hierzu kann bei der erfindungsgemäßen Reinigungsvorrichtung auch in der Produktleitung ein Dreiwegeventil angeordnet sein, von dem eine gewünschtenfalls mit einer Heizung und/ oder einer Pumpe versehene Rückführungsleitung abgeht, die in die Verdampfungseinrichtung mündet, insbesondere in den Sumpf der Verdampfungseinrichtung. Dies ist besonders vorteilhaft, weil hierdurch für einen Teilstrom des zu reinigenden Produkts die Strippkolonne mehrfach durchlaufen wird. Zudem kann insbesondere beim Anfahren der erfindungsgemäßen Reinigungsvorrichtung der die Strippkolonne durchlaufende Produktstrom vollständig über die Rückführungsleitung der Verdampfungseinrichtung zugeführt werden, bis eine Stabilisierung der Anlage in der Weise erfolgt, dass die angestrebten Maximalwerte an Verunreinigungen im gereinigten Produkt erreicht oder unterschritten werden. Zu diesem Zweck kann insbesondere in der Produktleitung stromaufwärts des Dreiwegeventils eine Probenentnahmestelle oder eine Messstation vorgesehen sein, mit der der Gehalt an zu entfernenden Verunreinigungen bestimmt werden kann. Der Gehalt an cyclischen Alkylencarbonaten kann beispielsweise mittels $^1$H-NMR bestimmt werden. Diese Methode wird im Beispielteil im Detail erläutert.

Zur Erzeugung der gewünschten Zirkulation können in der Reinigungsvorrichtung eine oder mehrere Pumpen vorgesehen sein, beispielsweise in der Zuleitung und / oder der Produktleitung.

Als Verdampfungseinrichtung kann für die erfindungsgemäße Reinigungsvorrichtung im Prinzip jede dem Fachmann bekannte Einrichtung zum Einsatz kommen. Hierfür kommen beispielsweise Naturumlauf-, Zwangsumlauf-, Fallfilm-, Dünnschicht- oder Kettle-Verdampfer zum Einsatz, von denen Fallfilm- und Dünnschicht-Verdampfer besonders bevorzugt sind. Dabei kann weiterhin vorgesehen sein, dass die Zuleitung in den Einlass der Verdampfungseinrichtung mündet und die Verbindungsleitung und die Gasauslassleitung vom Sumpf der Verdampfungseinrichtung abgehen.

Die Verdampfungseinrichtung kann mit einer Unterdruckeinrichtung gekoppelt sein, wobei diese insbesondere derart ausgestaltet ist, dass die Verdampfungseinrichtung bei einem Druck von 100 mbar oder darunter betrieben werden kann, vorzugsweise bei 5 bis 100 mbar, bevorzugt bei 50 mbar oder darunter, weiter bevorzugt bei 25 mbar oder darunter, besonders bevorzugt bei 10 mbar oder darunter. Dies ist besonders vorteilhaft, da die vorgenannten Betriebsdrücke bei den vorgenannten Betriebstemperaturen von beispielsweise 120 bis 180 °C eine gute Abtrennung der leicht flüchtigen Bestandteile erlauben, wobei gleichzeitig eine zu starke thermische Belastung des zu reinigenden Produktes verhindert wird.

Die Strippkolonne kann unter Normaldruck oder aber auch im Vakuum betrieben werden. In der letztgenannten

Ausführungsform ist hierfür die Strippkolonne zweckmäßigerweise mit einer Unterdruckeinrichtung gekoppelt, wobei diese insbesondere derart ausgestaltet ist, dass im Kopf der Strippkolonne ein Druck von 150 mbar oder darunter eingestellt werden kann, vorzugsweise 100 mbar oder darunter, bevorzugt 80 mbar oder darunter. Der Betrieb der Strippkolonne bei diesen Drücken und einer Temperatur von beispielsweise 120 bis 180 °C ermöglicht eine gute Abtrennung noch vorhandener leicht flüchtiger Verbindungen, wie cyclischer Alkylencarbonate, wobei gleichzeitig bei typischen Betriebstemperaturen von 120 bis 180 °C eine zu starke thermische Belastung des zu reinigenden Produktes vermieden wird.

Bei der erfindungsgemäßen Reinigungsvorrichtung kann bereits in der ersten Stufe, also der Verdampfungseinrichtung, ein wesentlicher Anteil der leicht flüchtigen Verbindungen aus dem zu reinigenden Produkt entfernt werden, so dass in der Strippkolonne nur noch ein geringer Anteil leicht flüchtiger Verbindungen entfernt werden muss. Das führt zu einer vergleichsweise geringen Abkühlung der Strippkolonne. Häufig genügt dann die Beheizung des Inertgasstroms und die Beheizung des der Strippkolonne zugeführten vorgereinigten Produkts, um die Strippkolonne auf der gewünschten Betriebstemperatur zu halten. Es ist dennoch ebenso möglich, die Strippkolonne mit einem Heizmantel zu versehen, um hierdurch einen im Wesentlichen adiabatischen Betrieb zu ermöglichen. Hierzu ist der Heizmantel zweckmäßigerweise über eine Steuerungseinrichtung mit einem oder mehreren Temperaturfühlern gekoppelt, die die Betriebstemperatur der Strippkolonne an verschiedenen Punkten bestimmen und die Heizleistung des Heizmantels entsprechend regeln. Dabei kann der Heizmantel auch in mehrere unabhängig voneinander regelbare Zonen unterteilt sein, um über die gesamte Trennlänge der Strippkolonne die gewünschte Temperatur einstellen zu können.

Die Strippkolonne ist vorteilhafterweise mit Füllkörpern und / oder Packungen gefüllt und / oder mit Böden bestückt. Dabei werden als Füllkörper vorzugsweise sogenannte Raschig Super-Ringe verwendet.

Ein weiterer Gegenstand der vorliegenden Erfindung betrifft ein Verfahren zur Reinigung von Polycarbonatpolyolen mit einer Reinigungsvorrichtung umfassend eine mit einer Heizung versehene Verdampfungseinrichtung mit einem an dessen Oberseite angeordneten Einlass und einem Sumpf und eine mit der Verdampfungseinrichtung stromabwärts verbundene Strippkolonne mit einem Kopf und einem Sumpf, insbesondere mit einer erfindungsgemäßen Reinigungsvorrichtung, wobei das Verfahren die folgenden Schritte umfasst:

a) Zuführen des zu reinigenden Polycarbonatpolyols in den Einlass der Verdampfungseinrichtung durch eine in diesen mündende Zuleitung;

b) in der Verdampfungseinrichtung Überführen eines Teils der Verunreinigungen in die Gasphase und Entfernen der gasförmigen Verunreinigungen über eine Gasauslassleitung, wobei im Sumpf der Verdampfungseinrichtung ein teilweise gereinigtes Polycarbonatpolyol erhalten wird;

c) Überführen des teilweise gereinigten Polycarbonatpolyols vom Sumpf der Verdampfungseinrichtung in den Kopf der Strippkolonne durch eine in diesen mündende Verbindungsleitung, insbesondere mittels einer Pumpe;

d) Entfernen eines weiteren Teils der Verunreinigungen aus dem teilweise gereinigten Polycarbonatpolyol mittels Strippen im Gegenstrom durch einen in den Sumpf der Strippkolonne über eine Gaseinlassleitung eingeleiteten und der Fließrichtung des Polycarbonatpolyols entgegengesetzten Inertgasstrom, wobei die Verunreinigungen in die Gasphase überführt und mit dem Inertgasstrom transportiert werden;

e) Abführen der Verunreinigungen mit dem Inertgas durch eine vom Kopf der Strippkolonne abgehende Gasauslassleitung;

f) Abführen des gereinigten Polycarbonatpolyols über eine vom Sumpf der Strippkolonne abgehende Produktleitung.

In vorteilhafter Ausgestaltung des erfindungsgemäßen Verfahrens kann als Inertgas Stickstoff, Kohlendioxid und / oder Wasserdampf verwendet werden. Wie bereits vorstehend ausgeführt wurde, umfassen die bei dem erfindungsgemäßen Verfahren zu entfernenden Verunreinigungen insbesondere cyclische Alkylencarbonate, vorzugsweise cyclisches Propylencarbonat.

Bei Verwendung von Stickstoff als Strippgas liegt der spezifische Stickstoff-Bedarf bevorzugt im Bereich von 0,2 - 0,8 kg Stickstoff, besonders bevorzugt im Bereich von 0,3 - 0,7 kg Stickstoff, jeweils bezogen auf die Masse (in kg) des der Strippkolonne zugeführten, teilweise gereinigten Polycarbonatpolyols. In vorteilhafter Ausgestaltung des erfindungsgemäßen Verfahrens beträgt der Anteil an cyclischen Alkylencarbonaten im gereinigten Polycarbonatpolyol weniger als 100 ppm. Dies kann beispielsweise dadurch erreicht werden, dass mithilfe von Dreiwegeventilen in der Verbindungsleitung und / oder der Produktleitung ein Teil des vorgereinigten Produkts wieder dem Reinigungsprozess zugeführt und damit einer erneuten Reinigung unterzogen wird, bis der gewünschte Maximalwert von 100 ppm an cyclischen Alkylencarbonaten im Polycarbonatpolyol erreicht ist.

Bei dem erfindungsgemäßen Verfahren ist es weiterhin von Vorteil, dass dem zu reinigenden Polycarbonatpolyol vor oder während der Reinigung Phosphorsäure zugesetzt wird, insbesondere in einer Konzentration von 10 bis 1000 ppm, bezogen auf das zu reinigende Polycarbonatpolyol, insbesondere 15 bis 500 ppm. Hierfür kann beispielsweise in der Zuleitung zur Verdampfungseinrichtung eine Einspeisung für Phosphorsäure vorgesehen sein. Dies ist besonders vorteilhaft, weil durch den Zusatz an Phosphorsäure eine Stabilisierung des Polycarbonatpolyols erzielt wird, wodurch eine Nachbildung von cyclischen Alkylencarbonaten innerhalb der Reinigungsvorrichtung reduziert wird. Die Nachbildung kann dadurch zustande kommen, dass bei erhöhten Temperaturen während der Reinigung unter Anwesenheit von im Produkt enthaltenen Katalysatorspuren, beispielsweise eines DMC-Katalysators, ein sogenannter "back-biting" Effekt auftritt, bei dem insbesondere an den Kettenenden des linearen Polycarbonatpolyols einzelne Kettenglieder abgespalten werden, die dann wiederum zu cyclischen Alkylencarbonaten reagieren können.

In einer ersten Ausführungsform betrifft die Erfindung somit eine Reinigungsvorrichtung für Polycarbonatpolyole, insbesondere zur Abtrennung cyclischer Alkylencarbonate, umfassend eine mit einer Heizung (10) versehene Verdampfungseinrichtung (1) mit einem an dessen Oberseite angeordneten Einlass (6) und einem Sumpf (11) und eine mit der Verdampfungseinrichtung (1) stromabwärts verbundene Strippkolonne (2) mit einem Kopf (21) und einem Sumpf (23), wobei in den Einlass (6) der Verdampfungseinrichtung (1) eine Zuleitung (5) für das zu reinigende Polycarbonatpolyol mündet und von der Verdampfungseinrichtung (1) eine Gasauslassleitung (12) sowie eine in den Kopf (21) der Strippkolonne (2) mündende und mit einer Pumpe (18) ausgestattete Verbindungsleitung abgehen,
und wobei in den Sumpf (23) der Strippkolonne (2) eine Gaseinlassleitung (24) für ein Inertgas mündet und vom Sumpf (23) der Strippkolonne (2) eine Produktleitung (27) für das gereinigte Polycarbonatpolyol und vom Kopf (21) der Strippkolonne (2) eine Gasauslassleitung (25) abgehen.

In einer zweiten Ausführungsform betrifft die Erfindung eine Reinigungsvorrichtung gemäß der ersten Ausführungsform, dadurch gekennzeichnet, dass die Gasauslassleitung (12) der Verdampfungseinrichtung (1) und/ oder die Gasauslassleitung (25) der Strippkolonne (2) jeweils in eine Kühleinrichtung (13) münden, in welcher in den gasförmigen Zustand überführte und über die Gasauslassleitung (12, 25) entfernte Verunreinigungen kondensiert werden können, insbesondere cyclische Alkylencarbonate.

In einer dritten Ausführungsform betrifft die Erfindung eine Reinigungsvorrichtung gemäß der ersten oder zweiten Ausführungsform, dadurch gekennzeichnet, dass die Zuleitung (5), die Verbindungsleitung (3), die Gaseinlassleitung (24) und/ oder die Produktleitung (27) mit einer Heizung (9) ausgerüstet sind.

In einer vierten Ausführungsform betrifft die Erfindung eine Reinigungsvorrichtung gemäß einer der Ausführungsformen 1 bis 3, dadurch gekennzeichnet, dass in der Verbindungsleitung (3) ein Dreiwegeventil (16) angeordnet ist, von dem eine gewünschtenfalls mit einer Heizung (9) und/ oder einer Pumpe (18) versehene Rückführungsleitung (17) abgeht, die in die Zuleitung (5) oder in den Einlass (6) der Verdampfungseinrichtung (1) mündet.

In einer fünften Ausführungsform betrifft die Erfindung eine Reinigungsvorrichtung gemäß einer der Ausführungsformen 1 bis 4, dadurch gekennzeichnet, dass in der Produktleitung (27) ein Dreiwegeventil (30) angeordnet ist, von dem eine gewünschtenfalls mit einer Heizung (9) und/ oder einer Pumpe (18) versehene Rückführungsleitung (31) abgeht, die in die Verdampfungseinrichtung (1) mündet, insbesondere in den Sumpf (11) der Verdampfungseinrichtung (1).

In einer sechsten Ausführungsform betrifft die Erfindung eine Reinigungsvorrichtung gemäß einer der Ausführungsformen 1 bis 5, dadurch gekennzeichnet, dass in der Zuleitung (5) und/ oder der Produktleitung (27) eine Pumpe (18) vorgesehen ist.

In einer siebten Ausführungsform betrifft die Erfindung eine Reinigungsvorrichtung gemäß einer der Ausführungsformen 1 bis 6, dadurch gekennzeichnet, dass die Verdampfungseinrichtung (1) als Naturumlauf-, Zwangsumlauf-, Fallfilm-, Dünnschicht- oder Kettle-Verdampfer ausgestaltet ist, bevorzugt als Fallfilm- oder Dünnschichtverdampfer, wobei die Zuleitung (5) in den Einlass (6) der Verdampfungseinrichtung (1) mündet und die Verbindungsleitung (3) und die Gasauslassleitung (12) vom Sumpf (11) der Verdampfungseinrichtung (1) abgehen.

In einer achten Ausführungsform betrifft die Erfindung eine Reinigungsvorrichtung gemäß einer der Ausführungsformen 1 bis 7, dadurch gekennzeichnet, dass die Verdampfungseinrichtung (1) mit einer Unterdruckeinrichtung gekoppelt ist, wobei diese insbesondere derart ausgestaltet ist, dass die Verdampfungseinrichtung (1) bei einem Druck von 100 mbar oder darunter betrieben werden kann, vorzugsweise bei 5 bis 100 mbar, bevorzugt bei 50 mbar oder darunter, weiter bevorzugt bei 25 mbar oder darunter, besonders bevorzugt bei 10 mbar oder darunter.

In einer neunten Ausführungsform betrifft die Erfindung eine Reinigungsvorrichtung gemäß einer der Ausführungsformen 1 bis 8, dadurch gekennzeichnet, dass die Strippkolonne (2) mit einer Unterdruckeinrichtung gekoppelt ist, wobei diese insbesondere derart ausgestaltet ist, dass im Kopf (21) der Strippkolonne (2) ein Druck von 150 mbar oder darunter eingestellt werden kann, vorzugsweise 100 mbar oder darunter, bevorzugt 80 mbar oder darunter.

In einer zehnten Ausführungsform betrifft die Erfindung eine Reinigungsvorrichtung gemäß einer der Ausführungsformen 1 bis 9, dadurch gekennzeichnet, dass die Strippkolonne (2) mit einem Heizmantel (22) versehen ist, der einen im Wesentlichen adiabatischen Betrieb der Strippkolonne (2) ermöglicht.

In einer elften Ausführungsform betrifft die Erfindung eine Reinigungsvorrichtung gemäß einer der Ausführungsformen 1 bis 10, dadurch gekennzeichnet, dass die Strippkolonne (2) mit Füllkörpern und/ oder Packungen gefüllt und/ oder mit Böden bestückt ist, wobei als Füllkörper insbesondere Raschig Super-Ringe eingesetzt sind.

In einer zwölften Ausführungsform betrifft die Erfindung ein Verfahren zur Reinigung von Polycarbonatpolyolen mit einer Reinigungsvorrichtung umfassend eine mit einer Heizung (10) versehene Verdampfungseinrichtung (1) mit einem an dessen Oberseite angeordneten Einlass (6) und einem Sumpf (11) und eine mit der Verdampfungseinrichtung (1) stromabwärts verbundene Strippkolonne (2) mit einem Kopf (21) und einem Sumpf (23), insbesondere mit einer Reinigungsvorrichtung nach einem der Ansprüche 1 bis 11, wobei das Verfahren die folgenden Schritte umfasst:

a) Zuführen des zu reinigenden Polycarbonatpolyols in den Einlass (6) der Verdampfungseinrichtung (1) durch eine in diesen mündende Zuleitung (5);

b) in der Verdampfungseinrichtung (1) Überführen eines Teils der Verunreinigungen in die Gasphase und Entfernen der gasförmigen Verunreinigungen über eine Gasauslassleitung (12), wobei im Sumpf (11) der Verdampfungseinrichtung (1) ein teilweise gereinigtes Polycarbonatpolyol erhalten wird;

c) Überführen des teilweise gereinigten Polycarbonatpolyols vom Sumpf (11) der Verdampfungseinrichtung (1) in den Kopf (21) der Strippkolonne (2) durch eine in diesen mündende Verbindungsleitung (3), insbesondere mittels einer Pumpe (18);

d) Entfernen eines weiteren Teils der Verunreinigungen aus dem teilweise gereinigten Polycarbonatpolyol mittels Strippen im Gegenstrom durch einen in den Sumpf (23) der Strippkolonne (2) über eine Gaseinlassleitung (24) eingeleiteten und der Fließrichtung des Polycarbonatpolyols entgegengesetzten Inertgasstrom, wobei die Verunreinigungen in die Gasphase überführt und mit dem Inertgasstrom transportiert werden;

e) Abführen der Verunreinigungen mit dem Inertgas durch eine vom Kopf (21) der Strippkolonne (2) abgehende Gasauslassleitung (25);

f) Abführen des gereinigten Polycarbonatpolyols über eine vom Sumpf (23) der Strippkolonne (2) abgehende Produktleitung (27).

In einer dreizehnten Ausführungsform betrifft die Erfindung ein Verfahren gemäß der zwölften Ausführungsform, dadurch gekennzeichnet, dass als Inertgas Stickstoff, Kohlendioxid und/oder Wasserdampf verwendet wird.

In einer vierzehnten Ausführungsform betrifft die Erfindung ein Verfahren gemäß einer der Ausführungsformen 12 oder 13, dadurch gekennzeichnet, dass die zu entfernenden Verunreinigungen cyclische Alkylencarbonate umfassen, insbesondere cyclisches Propylencarbonat, wobei der Anteil an cyclischen Alkylencarbonaten im gereinigten Polycarbonatpolyol vorzugsweise weniger als 100 ppm beträgt.

In einer fünfzehnten Ausführungsform betrifft die Erfindung ein Verfahren gemäß einer der Ausführungsformen 12 bis 14, dadurch gekennzeichnet, dass dem zu reinigenden Polycarbonatpolyol vor oder während der Reinigung Phosphorsäure zugesetzt wird, insbesondere in einer Konzentration von 10 bis 1000 ppm, bezogen auf das zu reinigende Polycarbonatpolyol, insbesondere 15 bis 500 ppm.

Die vorliegende Erfindung wird im Folgenden anhand einer Figur und Ausführungsbeispielen näher erläutert. Dabei zeigt die einzige

Fig. 1 einen schematischen Aufbau einer erfindungsgemäßen Reinigungsvorrichtung.

In Fig. 1 ist eine Ausführungsform einer erfindungsgemäßen Reinigungsvorrichtung für Polycarbonatpolyole abgebildet. Die Reinigungsvorrichtung dient hierbei zur Abtrennung cyclischer Alkylencarbonate aus Polycarbonatpolyolen, vorliegend Polyethercarbonatpolyolen, die mittels DMC-Katalyse erzeugt worden sind. Die Reinigungsvorrichtung besteht im Wesentlichen aus einer Verdampfungseinrichtung 1, die vorliegend als Fallfilm-Verdampfer ausgestaltet ist, und einer stromabwärts von der Verdampfungseinrichtung 1 angeordneten Strippkolonne 2. Die Verdampfungseinrichtung 1 und die Strippkolonne 2 sind über eine Verbindungsleitung 3 miteinander verbunden. Der Reinigungsvorrichtung wird das zu reinigende Polyethercarbonatpolyol aus einem beheizten Fass 4 über eine Zuleitung 5 zugeführt, welche in einen Einlass 6 der Verdampfungseinrichtung 1 mündet. Das Fass 4 ist zudem mit einer Belüftung 7 ausgerüstet. In der Zuleitung 5 sind Absperrventile 8 sowie eine Heizung 9 vorgesehen.

Die Verdampfungseinrichtung 1 verfügt über eine als Heizmantel ausgestaltete Heizung 10 mit einem Zulauf 10a und einem Ablauf 10b für ein Heizfluid. Die Verdampfungseinrichtung 1 verfügt an ihrem unteren Ende über einen Sumpf 11, wobei oberhalb des Sumpfes 11 eine Gasauslassleitung 12 für gasförmiges cyclisches Propylencarbonat vorgesehen ist, in der zwei sequentiell geschaltete Kühler 13 angeordnet sind, in der das cyclische Propylencarbonat kondensiert wird, wobei der Flüssigkeitsablauf für das kondensierte cyclische Propylencarbonat in einem Auffangbehälter 14 mündet. Nicht kondensierbare Bestandteile werden über eine stromabseitig der Kühler 13 angeordnete Abluftanlage

15 entfernt.

Unterhalb des Sumpfes 11 ist die Verbindungsleitung 3 angeschlossen, in der ein Dreiwegeventil 16 positioniert ist, über welches ein Teil des vorgereinigten Produktes über eine Rückführungsleitung 17 zum Einlass 6 der Verdampfungseinrichtung 1 zurückgeführt werden kann. Zur Zwangsförderung des vorgereinigten Produkts sind in der Verbindungsleitung 3 und in der Rückführungsleitung 17 Pumpen 18 vorgesehen. Zudem verfügt die Verbindungsleitung 3 über eine Probenentnahmestelle 19, an der der Gehalt an Verunreinigungen im Produktstrom bestimmt werden kann. Die Verbindungsleitung 3 ist ferner mit einer Heizung 9 und einem Wärmetauscher 20 ausgerüstet, mit deren Hilfe das in der Verdampfungseinrichtung 1 vorgereinigte Polyethercarbonatpolyol auf der gewünschten Temperatur gehalten beziehungsweise auf diese gebracht werden kann.

Die Strippkolonne 2 verfügt über einen Kopf 21, in den die Verbindungsleitung 3 mündet. Die Strippkolonne 2 ist als Glaskolonne DN80 mit 8 m Länge ausgeführt, mit Raschig Super-Ringen #0,3 als Füllkörper gefüllt und mit separat regelbaren Heizmänteln 22 versehen, die mit Hilfe von Temperaturfühlern 22a über eine mit diesen gekoppelte und vorliegend nicht dargestellte Temperatursteuerung einen im Wesentlichen adiabatischen Betrieb der Strippkolonne 2 ermöglichen. Die effektive Trennlänge der Glaskolonne von 8 m ist im oberen Bereich in einen 6 m langen und im unteren Bereich in einen 2 m langen Teilbereich aufgeteilt, wobei zwischen den Teilbereichen eine Probeentnahmestelle 19 vorgesehen ist.

Die Strippkolonne 2 verfügt ferner über einen Sumpf 23, oberhalb dessen eine Gaseinlassleitung 24 für Inertgas angeschlossen ist, über die mittels eines Wärmetauschers 20 beheizbares Inertgas, vorliegend Stickstoff, in die Strippkolonne 2 eingespeist werden kann, so dass diese im Gegenstromprinzip betreibbar ist. An den Kopf 21 der Strippkolonne 2 ist eine Gasauslassleitung 25 angeschlossen, über die mit flüchtigen Verunreinigungen, wie cyclisches Propylencarbonat, beladenes Inertgas über sequentiell nacheinander geschaltete Kühler 13 geführt werden kann, in welchen die Verunreinigungen auskondensierbar sind und in einem Behälter 14 aufgefangen werden können. Stromabseitig der Kühler 13 ist eine Kühlfalle 26 für noch nicht kondensierte gasförmige Verunreinigungen angeordnet, an die sich eine Abluftanlage 15 anschließt.

Vom Sumpf 23 der Strippkolonne 2 geht eine Produktleitung 27 ab, durch die das gereinigte Polyethercarbonatpolyol mithilfe einer Pumpe 18 in einen mit einer Belüftung 28 versehenen Produktbehälter 29 überführbar ist. Die Produktleitung 27 ist zudem mit einer Heizung 9 ausgerüstet. In der Produktleitung 27 ist ferner ein Dreiwegeventil 30 angeordnet, von dem eine Rückführungsleitung 31 abgeht, die in den Sumpf 11 der Verdampfungseinrichtung 1 mündet.

Die Herstellung eines mit der erfindungsgemäßen Vorrichtung zu reinigenden Rohprodukts erfolgte in einem kontinuierlich betriebenen 60 L Druckreaktor mit Gasdosierungseinrichtung und Produktaustragsrohr, in dem 4,7 kg Propylencarbonat (cPC) und 200 ppm aktivierter DMC-Katalysator (hergestellt gemäß WO 01/80994 A1, dortiges Beispiel 6) vorgelegt waren. Bei 107°C und 74 bar (absolut) wurden unter Rühren (15 Hz) folgende Komponenten mit den angegebenen Dosierraten dosiert:

- Propylenoxid mit 6,41 kg/h
- Kohlendioxid mit 2,6 kg/h
- Mischung aus Glycerin/Propylenglykol (85 Gew.-% / 15 Gew.-%) enthaltend 0,69 Gew.-% DMC-Katalysator (nicht aktiviert) und 170 ppm (bezogen auf die Startermischung) $H_3PO_4$ mit 0,26 kg/h.

Die Reaktionsmischung wurde über das Produktaustragsrohr kontinuierlich aus dem Reaktor entnommen, so dass das Reaktionsvolumen von 27,4 L konstant gehalten wurde. Zur Vervollständigung der Reaktion wurde das Reaktionsgemisch in einen auf 107°C temperierten Nachreaktor (Rohrreaktor mit Reaktionsvolumen 10,4 L) überführt. Das erhaltene Polyethercarbonatpolyol (Rohprodukt) enthält 8,4 Gew.-% cyclisches Propylencarbonat (cPC).

Der Gehalt an cyclischem Carbonat (welches als Nebenprodukt gebildet wurde) wird im Rahmen der vorliegenden Erfindung generell über die $^1$H-NMR-Resonanz bei 4,5 ppm bestimmt, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das ggf. als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (II) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (II) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1\text{-}4{,}8) + F(2{,}4) + 0{,}33 * F(1{,}2\text{-}1{,}0) + 0{,}25 * F(1{,}6\text{-}1{,}52)} * 100 \qquad \text{(II)}$$

Der Gewichtsanteil (in Gew.-%) polymer-gebundenen Carbonats (LC') in der Reaktionsmischung wurde nach Formel (III) berechnet,

$$LC' = \frac{[F(5{,}1-4{,}8) - F(4{,}5)] * 102}{N} * 100\% \qquad \text{(III)}$$

wobei sich der Wert für N ("Nenner" N) nach Formel (IV) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(IV)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des ggf. eingesetzten Starters 1,8-Octandiol.

Der Gewichtsanteil (in Gew.-%) an cyclischem Carbonat (CC') in der Reaktionsmischung wurde nach Formel (V) berechnet,

$$CC' = \frac{F(4{,}5) * 102}{N} * 100\% \qquad \text{(V)}$$

wobei sich der Wert für N nach Formel (IV) berechnet.

Beim Betrieb der in Fig. 1 dargestellten Reinigungsvorrichtung wird das wie vorstehend erzeugte Rohprodukt, also das mit herstellungsbedingten Verunreinigungen belastete Polyethercarbonatpolyol, ggf. nach Zusatz von unterschiedlichen Mengen Phosphorsäure (siehe Tabelle 1) zur Stabilisierung, von dem Fass 4 über die beheizte Zuleitung 5 in den Einlass 6 der Verdampfungseinrichtung 1 gepumpt. Zur Verringerung der Viskosität des Rohprodukts wird dieses bereits im Fass 4 auf 50 °C aufgeheizt und mit Leistungen von 2,1 kg/h bis 5,5 kg/h (siehe Tabelle 1) zur Verdampfungseinrichtung 1 gefördert. Der Fallfilm-Verdampfer ist als Glasapparatur mit einer Fläche von 0,5 $m^2$ ausgestaltet und wird mittels einer vorliegend nicht dargestellten Unterdruckeinrichtung bei einem Druck von 10 mbar betrieben.

In der Verdampfungseinrichtung 1 verdampft während des Durchlaufens des Rohprodukts ein Teil der leicht flüchtigen Verunreinigungen, insbesondere ein Teil des cyclischen Propylencarbonats, welches über die Gasauslassleitung 12 entfernt, über die Kühler 13 kondensiert und in dem Auffangbehälter 14 gesammelt wird. Hierbei wird der als erstes durchlaufende Kühler 13 mit einer Kühlmitteltemperatur bei 10 °C betrieben und der sequentiell nachgeschaltete Kühler 13 mit einer Kühlmitteltemperatur von -20 °C.

Das vorgereinigte Produkt sammelt sich im Sumpf 11 der Verdampfungseinrichtung 1, von wo aus es zu einem über das Dreiwegeventil 16 regelbaren Anteil über die Verbindungsleitung 3 der Strippkolonne 2 und zum anderen Teil über die Rückführungsleitung 17 zum Einlass 6 der Verdampfungseinrichtung 1 gefördert wird. Durch die Verwendung der Rückführungsleitung 17 wird ein Teil des bereits vorgereinigten Produkts nochmals der Reinigung über die Verdampfungseinrichtung 1 zugeführt, wodurch sich deren Reinigungsleistung erhöht. Das vorgereinigte Produkt besitzt am Ende des Fallrohrs der Verdampfungseinrichtung 1 eine Temperatur von etwa 160 °C. In der Verdampfungseinrichtung 1 werden bei der vorliegenden Anordnung etwa 70 Gew.-% der im Rohprodukt enthaltenen Leichtsieder abgetrennt.

Das über die Verbindungsleitung 3 dem Kreislauf entnommene vorgereinigte Produkt wird dem Kopf 21 der Strippkolonne 2 zugeführt. Dabei wird die Verbindungsleitung 3 mithilfe der Heizung 9 auf etwa 100 °C beheizt, um eine starke Erhöhung der Viskosität durch Abkühlung des Produktes zu verhindern. Unmittelbar vor der Aufgabe auf den

Kopf 21 der Strippkolonne 2 wird das vorgereinigte Produkt mittels des Wärmetauschers 20 auf etwa 160 °C erwärmt. Das vorgereinigte Produkt durchläuft die Strippkolonne 2 der Schwerkraft entsprechend, wobei die Strippkolonne 2 mithilfe der Heizmäntel 22 im Wesentlichen adiabatisch betrieben wird. Hierzu dienen die an mehreren Stellen mit den Heizmänteln 22 gekoppelten Temperaturfühler 22a.

Die Strippkolonne 2 wird im Gegenstromprinzip mit einem auf 160 °C beheizten und über die Gaseinlassleitung 24 eingespeisten Stickstoffstrom betrieben. In dem in Richtung des Kopfes 21 strömenden Stickstoffstrom reichern sich die leicht flüchtigen Bestandteile an und werden über die Gasauslassleitung 25 den Kühlern 13 zugeführt, in denen die leicht flüchtigen Verbindungen, insbesondere das cyclische Propylencarbonat, kondensiert und in dem Auffangbehälter 14 gesammelt werden. Dabei wird der als erstes durchlaufende Kühler 13 mit einer Temperatur von 10 °C und der nachgeschaltete Kühler mit einer Temperatur von -20 °C betrieben. An der im Zulauf der Kühlfalle 26 angeordneten Probeentnahmestelle 19 kann der Inertgasstrom noch auf etwaige Verunreinigungen hin überprüft werden, bevor er über die Abluftanlage 15 aus dem Kreislauf entfernt oder aber über eine Kompressionsanlage dem Kreislauf wieder zugeführt wird.

Im Sumpf 23 der Strippkolonne 2 sammelt sich das gereinigte Produkt, das die Strippkolonne 2 durchlaufen hat, und welches über die Produktleitung 27 mithilfe der Pumpe 18 in den Produktbehälter 29 überführt wird. Mithilfe des in der Produktleitung 27 vorgesehenen Dreiwegeventils 30 kann ein Teil des Produktstroms abgezweigt und über die Rückführungsleitung 31 wieder in den Sumpf 11 der Verdampfungseinrichtung 1 überführt werden. Während der Anfahrdauer der Reinigungsvorrichtung wird der gesamte im Sumpf 23 über die Produktleitung 27 ausgetragene Produktstrom über die Rückführungsleitung 31 wieder dem Sumpf 11 der Verdampfungseinrichtung 1 zugeführt, bis die gewünschte Produktreinheit erreicht ist. Dies wird mittels der in der Produktleitung 27 vorgesehenen Probeentnahmestelle 19 überprüft.

Die Verweilzeit des vorgereinigten Produkts beträgt im Sumpf 11 der Verdampfungseinrichtung 1 etwa 10 Minuten und in dem Sumpf 23 der Strippkolonne 2 etwa 6 Minuten.

In der beschriebenen Anlage wurden Versuche durchgeführt, wobei die Verdampfungseinrichtung 1, die Verbindungsleitung 3 zur Strippkolonne 2 und der Inertgasstrom (Stickstoff) auf 160 °C eingestellt wurden. Die Verdampfungseinrichtung 1 lief bei einem Betriebsdruck von 10 mbar, die Strippkolonne 2 bei 80 mbar. In Tabelle 1 sind die relevanten Prozessparameter sowie die erreichten Endkonzentrationen an cyclischem Propylencarbonat cPC im gereinigten Endprodukt zusammengefasst.

Tabelle 1:

| Beispiel | Zusatz Phosphorsäure | Durchsatz (Zulauf zur Verdampfungseinrichtung 1) | Massenstrom Strippgas (Stickstoff) in Strippkolonne 2 | cPC-Konzentration im Endprodukt |
|---|---|---|---|---|
| 1 | - | 5,5 kg/h | 2,275 kg/h | 55 ppm |
| 2 | 61 ppm | 4,7 kg/h | 2,275 kg/h | 17 ppm |
| 3 | 100 ppm | 2,1 kg/h | 2,275 kg/h | 17 ppm |
| 4 | 100 ppm | 4,2 kg/h | 2,275 kg/h | 20 ppm |
| 5 | 100 ppm | 5,2 kg/h | 2,275 kg/h | 24 ppm |

Die Versuche belegen, dass der geforderte Maximalwert von 100 ppm cPC im Endprodukt durch das erfindungsgemäße Verfahren zuverlässig unterschritten werden kann. Zusatz von geringen Mengen Phosphorsäure (Beispiele 2 - 5) bewirkt eine Stabilisierung des Polyethercarbonatpolyols, so dass hierdurch deutlich geringere Restkonzentrationen an cPC im Endprodukt erzielt werden als ohne Zusatz von Phosphorsäure (Beispiel 1).

Bezugszeichenliste:

(1) Verdampfungseinrichtung
(2) Strippkolonne
(3) Verbindungsleitung
(4) Fass
(5) Zuleitung
(6) Einlass

| | |
|---|---|
| (7) | Belüftung |
| (8) | Absperrventil |
| (9) | Heizung |
| (10) | Heizung |
| (10a) | Zulauf |
| (10b) | Ablauf |
| (11) | Sumpf |
| (12) | Gasauslassleitung |
| (13) | Kühler |
| (14) | Auffangbehälter |
| (15) | Abluftanlage |
| (16) | Dreiwegeventil |
| (17) | Rückführungsleitung |
| (18) | Pumpe |
| (19) | Probenentnahmestelle |
| (20) | Wärmetauscher |
| (21) | Kopf |
| (22) | Heizmantel |
| (22a) | Temperaturfühler |
| (23) | Sumpf |
| (24) | Gaseinlassleitung |
| (25) | Gasauslassleitung |
| (26) | Kühlfalle |
| (27) | Produktleitung |
| (28) | Belüftung |
| (29) | Produktbehälter |
| (30) | Dreiwegeventil |
| (31) | Rückführungsleitung |

**Patentansprüche**

1. Reinigungsvorrichtung für Polycarbonatpolyole, insbesondere zur Abtrennung cyclischer Alkylencarbonate, umfassend eine mit einer Heizung (10) versehene Verdampfungseinrichtung (1) mit einem an dessen Oberseite angeordneten Einlass (6) und einem Sumpf (11) und eine mit der Verdampfungseinrichtung (1) stromabwärts verbundene Strippkolonne (2) mit einem Kopf (21) und einem Sumpf (23),
wobei in den Einlass (6) der Verdampfungseinrichtung (1) eine Zuleitung (5) für das zu reinigende Polycarbonatpolyol mündet und von der Verdampfungseinrichtung (1) eine Gasauslassleitung (12) sowie eine in den Kopf (21) der Strippkolonne (2) mündende und mit einer Pumpe (18) ausgestattete Verbindungsleitung abgehen,
und wobei in den Sumpf (23) der Strippkolonne (2) eine Gaseinlassleitung (24) für ein Inertgas mündet und vom Sumpf (23) der Strippkolonne (2) eine Produktleitung (27) für das gereinigte Polycarbonatpolyol und vom Kopf (21) der Strippkolonne (2) eine Gasauslassleitung (25) abgehen.

2. Reinigungsvorrichtung nach Anspruch 1, **dadurch gekennzeichnet, dass** die Gasauslassleitung (12) der Verdampfungseinrichtung (1) und/ oder die Gasauslassleitung (25) der Strippkolonne (2) jeweils in eine Kühleinrichtung (13) münden, in welcher in den gasförmigen Zustand überführte und über die Gasauslassleitung (12, 25) entfernte Verunreinigungen kondensiert werden können, insbesondere cyclische Alkylencarbonate.

3. Reinigungsvorrichtung nach Anspruch 1 oder 2, **dadurch gekennzeichnet, dass** die Zuleitung (5), die Verbindungsleitung (3), die Gaseinlassleitung (24) und/ oder die Produktleitung (27) mit einer Heizung (9) ausgerüstet sind.

4. Reinigungsvorrichtung nach einem der vorstehenden Ansprüche, **dadurch gekennzeichnet, dass** in der Verbindungsleitung (3) ein Dreiwegeventil (16) angeordnet ist, von dem eine gewünschtenfalls mit einer Heizung (9) und/ oder einer Pumpe (18) versehene Rückführungsleitung (17) abgeht, die in die Zuleitung (5) oder in den Einlass (6) der Verdampfungseinrichtung (1) mündet.

5. Reinigungsvorrichtung nach einem der vorstehenden Ansprüche, **dadurch gekennzeichnet, dass** in der Produktleitung (27) ein Dreiwegeventil (30) angeordnet ist, von dem eine gewünschtenfalls mit einer Heizung (9) und/ oder

einer Pumpe (18) versehene Rückführungsleitung (31) abgeht, die in die Verdampfungseinrichtung (1) mündet, insbesondere in den Sumpf (11) der Verdampfungseinrichtung (1).

**6.** Reinigungsvorrichtung nach einem der vorstehenden Ansprüche, **dadurch gekennzeichnet, dass** in der Zuleitung (5) und/ oder der Produktleitung (27) eine Pumpe (18) vorgesehen ist.

**7.** Reinigungsvorrichtung nach einem der vorstehenden Ansprüche, **dadurch gekennzeichnet, dass** die Verdampfungseinrichtung (1) als Naturumlauf-, Zwangsumlauf-, Fallfilm-, Dünnschicht- oder Kettle-Verdampfer ausgestaltet ist, bevorzugt als Fallfilm- oder Dünnschichtverdampfer, wobei die Zuleitung (5) in den Einlass (6) der Verdampfungseinrichtung (1) mündet und die Verbindungsleitung (3) und die Gasauslassleitung (12) vom Sumpf (11) der Verdampfungseinrichtung (1) abgehen.

**8.** Reinigungsvorrichtung nach einem der vorstehenden Ansprüche, **dadurch gekennzeichnet, dass** die Verdampfungseinrichtung (1) mit einer Unterdruckeinrichtung gekoppelt ist, wobei diese insbesondere derart ausgestaltet ist, dass die Verdampfungseinrichtung (1) bei einem Druck von 100 mbar oder darunter betrieben werden kann, vorzugsweise bei 5 bis 100 mbar, bevorzugt bei 50 mbar oder darunter, weiter bevorzugt bei 25 mbar oder darunter, besonders bevorzugt bei 10 mbar oder darunter.

**9.** Reinigungsvorrichtung nach einem der vorstehenden Ansprüche, **dadurch gekennzeichnet, dass** die Strippkolonne (2) mit einer Unterdruckeinrichtung gekoppelt ist, wobei diese insbesondere derart ausgestaltet ist, dass im Kopf (21) der Strippkolonne (2) ein Druck von 150 mbar oder darunter eingestellt werden kann, vorzugsweise 100 mbar oder darunter, bevorzugt 80 mbar oder darunter.

**10.** Reinigungsvorrichtung nach einem der vorstehenden Ansprüche, **dadurch gekennzeichnet, dass** die Strippkolonne (2) mit einem Heizmantel (22) versehen ist, der einen im Wesentlichen adiabatischen Betrieb der Strippkolonne (2) ermöglicht.

**11.** Reinigungsvorrichtung nach einem der vorstehenden Ansprüche, **dadurch gekennzeichnet, dass** die Strippkolonne (2) mit Füllkörpern und/ oder Packungen gefüllt und/ oder mit Böden bestückt ist, wobei als Füllkörper insbesondere Raschig Super-Ringe eingesetzt sind.

**12.** Verfahren zur Reinigung von Polycarbonatpolyolen mit einer Reinigungsvorrichtung umfassend eine mit einer Heizung (10) versehene Verdampfungseinrichtung (1) mit einem an dessen Oberseite angeordneten Einlass (6) und einem Sumpf (11) und eine mit der Verdampfungseinrichtung (1) stromabwärts verbundene Strippkolonne (2) mit einem Kopf (21) und einem Sumpf (23), insbesondere mit einer Reinigungsvorrichtung nach einem der Ansprüche 1 bis 11, wobei das Verfahren die folgenden Schritte umfasst:

a) Zuführen des zu reinigenden Polycarbonatpolyols in den Einlass (6) der Verdampfungseinrichtung (1) durch eine in diesen mündende Zuleitung (5);
b) in der Verdampfungseinrichtung (1) Überführen eines Teils der Verunreinigungen in die Gasphase und Entfernen der gasförmigen Verunreinigungen über eine Gasauslassleitung (12), wobei im Sumpf (11) der Verdampfungseinrichtung (1) ein teilweise gereinigtes Polycarbonatpolyol erhalten wird;
c) Überführen des teilweise gereinigten Polycarbonatpolyols vom Sumpf (11) der Verdampfungseinrichtung (1) in den Kopf (21) der Strippkolonne (2) durch eine in diesen mündende Verbindungsleitung (3), insbesondere mittels einer Pumpe (18);
d) Entfernen eines weiteren Teils der Verunreinigungen aus dem teilweise gereinigten Polycarbonatpolyol mittels Strippen im Gegenstrom durch einen in den Sumpf (23) der Strippkolonne (2) über eine Gaseinlassleitung (24) eingeleiteten und der Fließrichtung des Polycarbonatpolyols entgegengesetzten Inertgasstrom, wobei die Verunreinigungen in die Gasphase überführt und mit dem Inertgasstrom transportiert werden;
e) Abführen der Verunreinigungen mit dem Inertgas durch eine vom Kopf (21) der Strippkolonne (2) abgehende Gasauslassleitung (25);
f) Abführen des gereinigten Polycarbonatpolyols über eine vom Sumpf (23) der Strippkolonne (2) abgehende Produktleitung (27).

**13.** Verfahren nach Anspruch 12, **dadurch gekennzeichnet, dass** als Inertgas Stickstoff, Kohlendioxid und/oder Wasserdampf verwendet wird.

**14.** Verfahren nach Anspruch 12 oder 13, **dadurch gekennzeichnet, dass** die zu entfernenden Verunreinigungen

cyclische Alkylencarbonate umfassen, insbesondere cyclisches Propylencarbonat, wobei der Anteil an cyclischen Alkylencarbonaten im gereinigten Polycarbonatpolyol vorzugsweise weniger als 100 ppm beträgt.

**15.** Verfahren nach einem der Ansprüche 12 bis 14, **dadurch gekennzeichnet, dass** dem zu reinigenden Polycarbonatpolyol vor oder während der Reinigung Phosphorsäure zugesetzt wird, insbesondere in einer Konzentration von 10 bis 1000 ppm, bezogen auf das zu reinigende Polycarbonatpolyol, insbesondere 15 bis 500 ppm.

## Claims

**1.** Purifying apparatus for polycarbonate polyols, especially for removal of cyclic alkylene carbonates, comprising an evaporation unit (1) provided with a heater (10) and having an inlet (6) arranged at the top end thereof and having a bottoms vessel (11), and a stripping column (2) which is connected to the evaporation unit (1) in the downstream direction and has a top (21) and a bottom (23),
wherein a feed (5) for the polycarbonate polyol to be purified opens into the inlet (6) of the evaporation unit (1), and a gas outlet line (12) and a connecting line which opens into the top (21) of the stripping column (2) and has been equipped with a pump (18) depart from the evaporation unit (1),
and wherein a gas inlet line (24) for an inert gas opens into the bottom (23) of the stripping column (2), and a product line (27) for the purified polycarbonate polyol departs from the bottom (23) of the stripping column (2) and a gas outlet line (25) from the top (21) of the stripping column (2) .

**2.** Purifying apparatus according to Claim 1, **characterized in that** the gas outlet line (12) of the evaporation unit (1) and/or the gas outlet line (25) of the stripping column (2) each open into a cooling unit (13) in which impurities that have been converted to the gaseous state and removed via the gas outlet line (12, 25) can be condensed, especially cyclic alkylene carbonates.

**3.** Purifying apparatus according to Claim 1 or 2, **characterized in that** the feed (5), the connecting line (3), the gas inlet line (24) and/or the product line (27) has/have been equipped with a heater (9).

**4.** Purifying apparatus according to any of the preceding claims, **characterized in that** there is a three-way valve (16) disposed within the connecting line (3), from which a recycle line (17) provided if desired with a heater (9) and/or a pump (18) departs and opens into the feed (5) or into the inlet (6) of the evaporation unit (1).

**5.** Purifying apparatus according to any of the preceding claims, **characterized in that** there is a three-way valve (30) disposed within the product line (27), from which a recycle line (31) provided if desired with a heater (9) and/or a pump (18) departs and opens into the evaporation unit (1), especially into the bottom (11) of the evaporation unit (1).

**6.** Purifying apparatus according to any of the preceding claims, **characterized in that** a pump (18) is provided in the feed (5) and/or the product line (27).

**7.** Purifying apparatus according to any of the preceding claims, **characterized in that** the evaporation unit (1) is configured as a natural circulation, forced circulation, falling film, thin-film or kettle evaporator, preferably as a falling-film or thin-film evaporator, where the feed (5) opens into the inlet (6) of the evaporation unit (1) and the connecting line (3) and the gas outlet line (12) depart from the bottom (11) of the evaporation unit (1).

**8.** Purifying apparatus according to any of the preceding claims, **characterized in that** the evaporation unit (1) is coupled to a reduced pressure unit, the latter especially being configured such that the evaporation unit (1) can be operated at a pressure of 100 mbar or lower, preferably at 5 to 100 mbar, preferably at 50 mbar or lower, further preferably at 25 mbar or lower, more preferably at 10 mbar or lower.

**9.** Purifying apparatus according to any of the preceding claims, **characterized in that** the stripping column (2) is coupled to a reduced pressure unit, the latter especially being configured such that, in the top (21) of the stripping column (2), a pressure of 150 mbar or lower can be established, preferably 100 mbar or lower, more preferably 80 mbar or lower.

**10.** Purifying apparatus according to any of the preceding claims, **characterized in that** the stripping column (2) is provided with a heating jacket (22) which enables essentially adiabatic operation of the stripping column (2).

**11.** Purifying apparatus according to any of the preceding claims, **characterized in that** the stripping column (2) is filled with random packings and/or structure packings and/or equipped with trays, the random packings used especially being Raschig Super rings.

**12.** Process for purifying polycarbonate polyols with a purifying apparatus comprising an evaporation unit (1) provided with a heater (10) and having an inlet (6) arranged at the top end thereof and having a bottoms vessel (11), and a stripping column (2) which is connected to the evaporation unit (1) in the downstream direction and has a top (21) and a bottom (23), especially with a purifying apparatus according to any of Claims 1 to 11, wherein the process comprises the following steps:

a)feeding the polycarbonate polyol to be purified into the inlet (6) of the evaporation unit (1) through a feed (5) that opens into it;
b)in the evaporation unit (1) converting a portion of the impurities to the gas phase and removing the gaseous impurities via a gas outlet line (12), giving a partly purified polycarbonate polyol in the bottom (11) of the evaporation unit (1);
c)transferring the partly purified polycarbonate polyol from the bottom (11) of the evaporation unit (1) into the top (21) of the stripping column (2) through a connecting line (3) that opens into it, especially by means of a pump (18);
d)removing a further portion of the impurities from the partly purified polycarbonate polyol by means of stripping in countercurrent by an inert gas stream introduced into the bottom (23) of the stripping column (2) via a gas inlet line (24) and flowing in the opposite direction to the flow direction of the polycarbonate polyol, with conversion of the impurities to the gas phase and transportation thereof with the inert gas stream;
e)removing the impurities with the inert gas through a gas outlet line (25) which departs from the top (21) of the stripping column (2);
f)removing the purified polycarbonate polyol via a product line (27) which departs from the bottom (23) of the stripping column (2).

**13.** Process according to Claim 12, **characterized in that** the inert gas used is nitrogen, carbon dioxide and/or steam.

**14.** Process according to Claim 12 or 13, **characterized in that** the impurities to be removed comprise cyclic alkylene carbonates, especially cyclic propylene carbonate, where the proportion of cyclic alkylene carbonates in the purified polycarbonate polyol is preferably less than 100 ppm.

**15.** Process according to any of Claims 12 to 14, **characterized in that** phosphoric acid is added to the polycarbonate polyol to be purified before or during the purification, especially in a concentration of 10 to 1000 ppm, based on the polycarbonate polyol to be purified, especially 15 to 500 ppm.

## Revendications

**1.** Dispositif de purification pour polycarbonate-polyols, notamment pour la séparation de carbonates d'alkylène cycliques, comprenant un appareil d'évaporation (1) muni d'un chauffage (10), comprenant une entrée (6) agencée sur son côté supérieur et un fond (11), et une colonne d'extraction (2) raccordée en aval avec l'appareil d'évaporation (1), comprenant une tête (21) et un fond (23),
une conduite d'alimentation (5) pour le polycarbonate-polyol à purifier débouchant dans l'entrée (6) de l'appareil d'évaporation (1), et une conduite de sortie de gaz (12) et une conduite de raccordement débouchant dans la tête (21) de la colonne d'extraction (2) et équipée d'une pompe (18) partant de l'appareil d'évaporation (1),
et une conduite d'entrée de gaz (24) pour un gaz inerte débouchant dans le fond (23) de la colonne d'extraction (2), et une conduite de produit (27) pour le polycarbonate-polyol purifié partant du fond (23) de la colonne d'extraction (2), et une conduite de sortie de gaz (25) partant de la tête (21) de la colonne d'extraction (2).

**2.** Dispositif de purification selon la revendication 1, **caractérisé en ce que** la conduite de sortie de gaz (12) de l'appareil d'évaporation (1) et/ou la conduite de sortie de gaz (25) de la colonne d'extraction (2) débouchent chacune dans un appareil de refroidissement (13), dans lequel les impuretés transférées à l'état gazeux et éliminées par la conduite de sortie de gaz (12, 25) peuvent être condensées, notamment les carbonates d'alkylène cycliques.

**3.** Dispositif de purification selon la revendication 1 ou 2, **caractérisé en ce que** la conduite d'alimentation (5), la conduite de raccordement (3), la conduite d'entrée de gaz (24) et/ou la conduite de produit (27) sont équipées d'un

chauffage (9).

4. Dispositif de purification selon l'une quelconque des revendications précédentes, **caractérisé en ce qu'**une valve à trois voies (16) est agencée dans la conduite de raccordement (3), de laquelle part une conduite de recyclage (17) éventuellement munie d'un chauffage (9) et/ou d'une pompe (18), qui débouche dans la conduite d'alimentation (5) ou dans l'entrée (6) de l'appareil d'évaporation (1).

5. Dispositif de purification selon l'une quelconque des revendications précédentes, **caractérisé en ce qu'**une valve à trois voies (30) est agencée dans la conduite de produit (27), de laquelle part une conduite de recyclage (31) éventuellement munie d'un chauffage (9) et/ou d'une pompe (18), qui débouche dans l'appareil d'évaporation (1), notamment dans le fond (11) de l'appareil d'évaporation (1).

6. Dispositif de purification selon l'une quelconque des revendications précédentes, **caractérisé en ce qu'**une pompe (18) est prévue dans la conduite d'alimentation (5) et/ou dans la conduite de produit (27) .

7. Dispositif de purification selon l'une quelconque des revendications précédentes, **caractérisé en ce que** l'appareil d'évaporation (1) est configuré sous la forme d'un évaporateur à circulation naturelle, à circulation forcée, à film tombant, à couche mince ou à bouilloire, de préférence sous la forme d'un évaporateur à film tombant ou à couche mince, la conduite d'alimentation (5) débouchant dans l'entrée (6) de l'appareil d'évaporation (1), et la conduite de raccordement (3) et la conduite de sortie de gaz (12) partant du fond (11) de l'appareil d'évaporation (1).

8. Dispositif de purification selon l'une quelconque des revendications précédentes, **caractérisé en ce que** l'appareil d'évaporation (1) est couplé avec un appareil à sous-pression, celui-ci étant notamment configuré de telle sorte que l'appareil d'évaporation (1) puisse être exploité à une pression de 100 mbar ou moins, de préférence de 5 à 100 mbar, de préférence de 50 mbar ou moins, de manière davantage préférée de 25 mbar ou moins, de manière particulièrement préférée de 10 mbar ou moins.

9. Dispositif de purification selon l'une quelconque des revendications précédentes, **caractérisé en ce que** la colonne d'extraction (2) est couplée avec un appareil de sous pression, celui-ci étant notamment configuré de telle sorte qu'une pression de 150 mbar ou moins puisse être ajustée dans la tête (21) de la colonne d'extraction (2), de préférence de 100 mbar ou moins, de préférence de 80 mbar ou moins.

10. Dispositif de purification selon l'une quelconque des revendications précédentes, **caractérisé en ce que** la colonne d'extraction (2) est munie d'une enveloppe chauffante (22), qui permet une exploitation essentiellement adiabatique de la colonne d'extraction (2) .

11. Dispositif de purification selon l'une quelconque des revendications précédentes, **caractérisé en ce que** la colonne d'extraction (2) est remplie avec des corps de remplissage et/ou des garnissages et/ou est équipée de fonds, des super-anneaux de Raschig étant notamment utilisés en tant que corps de remplissage.

12. Procédé de purification de polycarbonate-polyols avec un dispositif de purification comprenant un appareil d'évaporation (1) muni d'un chauffage (10), comprenant une entrée (6) agencée sur son côté supérieur et un fond (11), et une colonne d'extraction (2) raccordée en aval avec l'appareil d'évaporation (1), comprenant une tête (21) et un fond (23), notamment avec un dispositif de purification selon l'une quelconque des revendications 1 à 11, le procédé comprenant les étapes suivantes :

   a) l'introduction du polycarbonate-polyol à purifier dans l'entrée (6) de l'appareil d'évaporation (1) par une conduite d'alimentation (5) débouchant dans celle-ci ;
   b) dans l'appareil d'évaporation (1), le transfert d'une partie des impuretés dans la phase gazeuse et l'élimination des impuretés gazeuses par une conduite de sortie de gaz (12), un polycarbonate-polyol partiellement purifié étant obtenu dans le fond (11) de l'appareil d'évaporation (1) ;
   c) le transfert du polycarbonate-polyol partiellement purifié depuis le fond (11) de l'appareil d'évaporation (1) dans la tête (21) de la colonne d'extraction (2) par une conduite de raccordement (3) débouchant dans celle-ci, notamment au moyen d'une pompe (18) ;
   d) l'élimination d'une autre partie des impuretés du polycarbonate-polyol partiellement purifié par extraction à contre-courant par un courant de gaz inerte introduit dans le fond (23) de la colonne d'extraction (2) par une conduite d'entrée de gaz (24) et opposé à la direction d'écoulement du polycarbonate-polyol, les impuretés étant transférées dans la phase gazeuse et transportées avec le courant de gaz inerte ;

e) le déchargement des impuretés avec le gaz inerte par une conduite de sortie de gaz (25) partant de la tête (21) de la colonne d'extraction (2) ;
f) le déchargement du polycarbonate-polyol purifié par une conduite de produit (27) partant du fond (23) de la colonne d'extraction (2).

**13.** Procédé selon la revendication 12, **caractérisé en ce que** de l'azote, du dioxyde de carbone et/ou de la vapeur d'eau sont utilisés en tant que gaz inerte.

**14.** Procédé selon la revendication 12 ou 13, **caractérisé en ce que** les impuretés à éliminer comprennent des carbonates d'alkylène cycliques, notamment du carbonate de propylène cyclique, la proportion de carbonates d'alkylène cycliques dans le polycarbonate-polyol à purifier étant de préférence inférieure à 100 ppm.

**15.** Procédé selon l'une quelconque des revendications 12 à 14, **caractérisé en ce que** de l'acide phosphorique est ajouté au polycarbonate-polyol à purifier avant ou pendant la purification, notamment en une concentration de 10 à 1 000 ppm, par rapport au polycarbonate-polyol à purifier, notamment de 15 à 500 ppm.

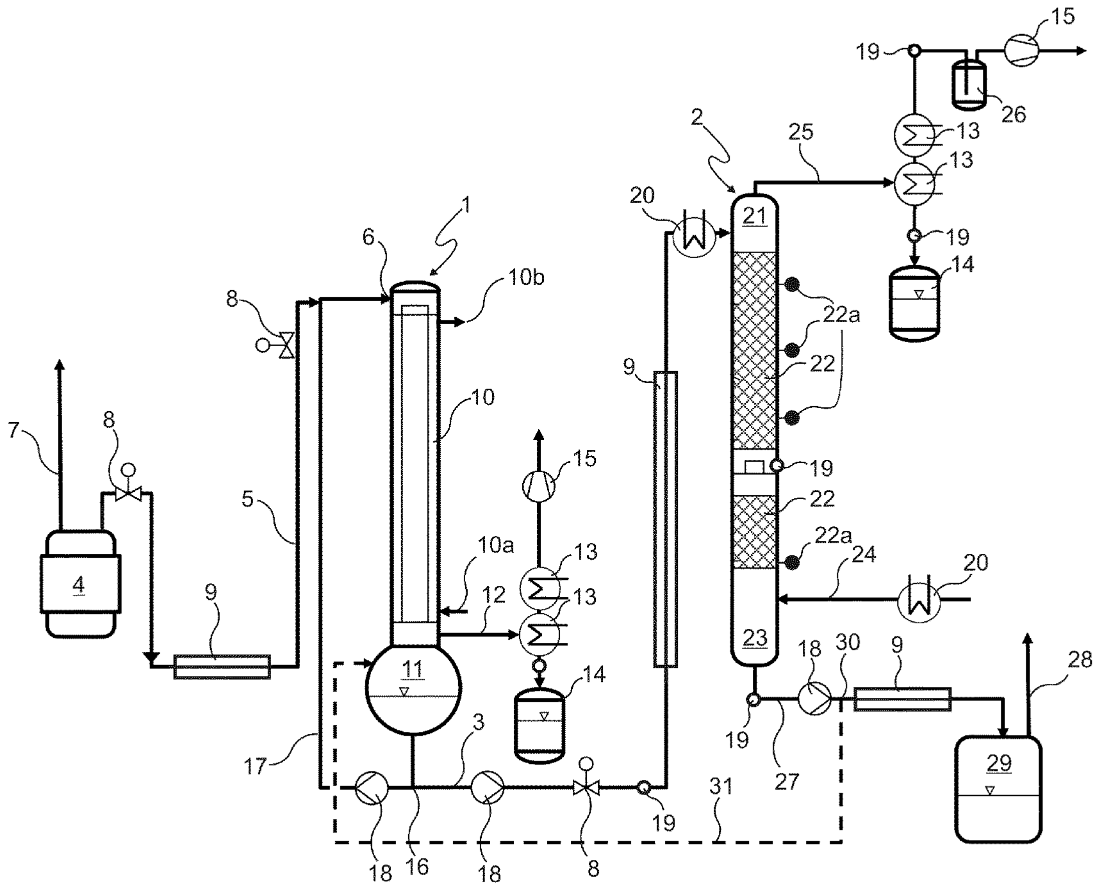
1
2
3
4
5
6
7
8
8
8
8
9
9
9
10
10a
10b
11
12
13
13
13
13
14
14
15
15
16
17
18
18
18
19
19
19
19
19
20
20
21
22
22
22a
22a
23
24
25
26
27
28
29
30
31

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010028362 A1
- WO 2008092767 A1
- WO 2008092767 A
- WO 0180994 A1